(19) Europäisches Patentamt
European Patent Office
Office européen des brevets

(11) **EP 4 671 285 A1**

(12) **EUROPEAN PATENT APPLICATION**
published in accordance with Art. 153(4) EPC

(43) Date of publication:
**31.12.2025 Bulletin 2026/01**

(21) Application number: 24760658.5

(22) Date of filing: **19.02.2024**

(51) International Patent Classification (IPC):
***C08F 6/06*** (2006.01)          ***C08F 2/04*** (2006.01)
***C08F 2/01*** (2006.01)          ***C08F 10/00*** (2006.01)

(52) Cooperative Patent Classification (CPC):
**B01D 5/0054; B01D 17/00; B01J 19/0013;**
**B01J 19/06; B01J 19/2465;** B01J 2219/00033;
B01J 2219/0011; B01J 2219/00162

(86) International application number:
**PCT/KR2024/095377**

(87) International publication number:
**WO 2024/177470 (29.08.2024 Gazette 2024/35)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **20.02.2023 KR 20230022474**

(71) Applicant: **LG Chem, Ltd.**
**Yeongdeungpo-gu**
**Seoul 07336 (KR)**

(72) Inventors:
• **LEE, Chanhee**
**Daejeon 34122 (KR)**
• **CHOI, Seung Won**
**Daejeon 34122 (KR)**

(74) Representative: **Hoffmann Eitle**
**Patent- und Rechtsanwälte PartmbB**
**Arabellastraße 30**
**81925 München (DE)**

(54) **CONTINUOUS SOLUTION POLYMERIZATION PROCESS**

(57)     The continuous solution polymerization process according to an exemplary embodiment comprises: producing a product comprising a polymer through a polymerization process in a reactor; separating the product into a first solution comprising the polymer and a second solution comprising the polymer in the liquid-liquid separator; supplying the first solution to a devolatilizer and supplying the second solution separated to a solid-liquid separator (S/L separator); separating the second solution into a vapor comprising the polymer and a liquid-state polymer in the devolatilizer; separating the second solution and the vapor comprising the polymer into a solvent capable of being introduced into the reactor and a solid comprising the polymer in the solid-liquid separator (S/L separator); and introducing and recirculating the solvent capable of being introduced into the reactor into the reactor.

[Figure 1]

**Description**

[Technical Field]

This application claims priority to and the benefit of Korean Patent Application No. 10-2023-0022474 filed in the Korean Intellectual Property Office on February 20, 2023, the entire contents of which are incorporated herein by reference.

The present application relates to a continuous solution polymerization process.

[Background Art]

In a polymer continuous solution polymerization process, the reactor effluent is typically subjected to one or more separation steps, and during the process, a process, in which a separated solvent and a monomer are recirculated to a polymerization reactor, is comprised.

However, the physical entrainment of an oligomer, a low-density material, and a product may occur in a devolatilizer corresponding to the rear end of the reaction of the polymer continuous solution polymerization process, thereby interfering with the recirculation process.

Specifically, when the oligomer, the low-density material, and the product are physically entrained to the devolatilizer, fouling, which is a contamination in which the materials physically entrained as described above are accumulated into a unit such as a condenser, a pump, and a heat exchanger, occurs in the process of recycling the separated solvent.

The fouling as described above causes instability in the recirculation process to occur, which will impede the long-term operability of the entire polymer continuous solution polymerization process and aggravate a problem of the loss of product productivity.

Therefore, there is a need for a method for preventing a phenomenon in which an oligomer, a low-density material and a product are physically entrained together to prevent fouling, and effectively recirculating only a material required for a polymer continuous solution polymerization process.

[Detailed Description of the Invention]

[Technical Problem]

The present application has been made in an effort to provide a continuous solution polymerization process comprising a recirculation system capable of effectively preventing the fouling phenomenon.

[Technical Solution]

An exemplary embodiment of the present application provides a continuous solution polymerization process comprising:

producing a product comprising a polymer through a polymerization process in a reactor;
supplying the product to a liquid-liquid separator (L/L separator);
separating the supplied product into a first solution comprising the polymer and a second solution comprising the polymer in the liquid-liquid separator;
supplying the first solution separated from the liquid-liquid separator to a devolatilizer;
supplying the second solution separated from the liquid-liquid separator to a solid-liquid separator (S/L separator);
separating the the first solution into a vapor comprising the polymer and a liquid-state polymer in the devolatilizer;
supplying the vapor comprising the polymer separated from the devolatilizer to the solid-liquid separator (S/L separator);
separating the supplied second solution and the vapor comprising the polymer into a solvent capable of being introduced into the reactor and a solid comprising the polymer in the solid-liquid separator; and
introducing and recirculating the solvent capable of being introduced into the reactor separated from the solid-liquid separator into the reactor,
in which the first solution and the second solution satisfy the following Equation 1.

[Equation 1]

$$M_a > M_b$$

In Equation 1,

$M_a$ means the content of the polymer in the first solution, and
$M_b$ means the content of the polymer in the second solution.

[Advantageous Effects]

The continuous solution polymerization process according to the present application has a recirculation system, and thus, can increase energy efficiency.
Since the continuous solution polymerization process according to the present application can prevent the fouling phenomenon, the efficiency of the recirculation system can be improved, thereby allowing the continuous solution polymerization process to be performed for a long time, so that productivity can be increased.

[Brief Description of Drawings]

FIG. 1 is a block diagram illustrating the continuous solution polymerization process according to the present application.
FIG. 2 is a block diagram illustrating an existing continuous solution polymerization process.

[Explanation of Reference Numerals and Symbols]

100: Feed supply vessel
150: Feed pump
160: Eighth heat exchanger
200: Reactor
230: First heat exchanger
240: Liquid-liquid separator
250: Third heat exchanger
260: Solid-liquid separator
270: Seventh heat exchanger
330: Second heat exchanger
340: Devolatilizer
350: Fourth heat exchanger
360: Tank
380: Sixth heat exchanger

[Best Mode]

Hereinafter, the present invention will be described in detail such that a person skilled in the art to which the present application pertains can easily carry out the present invention. However, the present application may be implemented in various different forms, and is not limited to the configurations described herein.
When one part "comprises" one constituent element in the present specification, unless otherwise specifically described, this does not mean that another constituent element is excluded, but means that another constituent element may be further comprised.
In the present specification, 'p to q' means 'p or more and q or less'.
In the present specification, the 'polymerization process' may also be expressed as 'a polymerization method' or 'a method for preparing a polymer through a polymerization process.'
In the present specification, 'nth' is used to distinguish a device or solution with the same name, and does not mean a specific order.
In the present specification, the reactor may be used in the form of a CSTR (autoclave), a solution-loop reactor, and a PFR, but is not limited thereto, and various types of reactors can be used, as long as they can withstand the conditions under which a polymerization reaction is conducted.

In the present specification, "a product comprising a polymer through a polymerization process" may mean comprising a polymer and other materials that will become a final product.

Further, in describing the present application, detailed descriptions of related known techniques that may unnecessarily obscure the gist of the present application will be omitted.

An exemplary embodiment of the present application provides a continuous solution polymerization process comprising: producing a product comprising a polymer through a polymerization process in a reactor; supplying the product to a liquid-liquid separator (L/L separator); separating the supplied product into a first solution comprising the polymer and a second solution comprising the polymer in the liquid-liquid separator; supplying the first solution separated from the liquid-liquid separator to a devolatilizer; supplying the second solution separated from the liquid-liquid separator to a solid-liquid separator (S/L separator); separating the second solution into a vapor comprising the polymer and a liquid-state polymer in the devolatilizer; supplying the vapor comprising the polymer separated from the devolatilizer to the solid-liquid separator (S/L separator); separating the supplied second solution and the vapor comprising the polymer into a solvent capable of being introduced into the reactor and a solid comprising the polymer in the solid-liquid separator; and introducing and recirculating the solvent capable of being introduced into the reactor separated from the solid-liquid separator into the reactor, in which the first solution and the second solution satisfy the following Equation 1.

$$[\text{Equation 1}]$$

$$M_a > M_b$$

In Equation 1,

$M_a$ means the content of the polymer in the first solution, and
$M_b$ means the content of the polymer in the second solution.

The continuous solution polymerization process according to the present application has a recirculation system, and thus, can increase energy efficiency. Further, since the recirculation system according to the present application may reduce the processing flow rate of a devolatilizer by introducing a liquid-liquid separator, the energy required for the heat exchange process generated in the process of supplying materials to the devolatilizer may be reduced. In addition, by introducing a liquid-liquid separator, it is possible to prevent the physical entrainment of an oligomer, a low-density material, and a product in the devolatilizer, thereby improving the efficiency of the recirculation system. That is, the continuous solution polymerization process according to the present application may prevent the fouling phenomenon.

As a result, the continuous solution polymerization process according to the present application may improve the efficiency of the recirculation system, thereby allowing the continuous solution polymerization process to be performed for a long time, so that productivity may be increased.

In the present specification, the "first solution comprising a polymer" means a solution comprising a large amount of a polymer (polymer-rich solution), and the "second solution comprising a polymer" means a solution comprising a small amount of polymer (polymer-lean solution). That is, in Equation 1 above, $M_a$ may mean the weight of the polymer in the first solution, and $M_b$ may mean the weight of the polymer in the second solution.

Furthermore, in the present specification, the "vapor comprising the polymer" comprises a relatively smaller amount of polymer than the content of polymer contained in the solution, and may be expressed as a vapor comprising a small amount of polymer.

In the present specification, "a product comprising a polymer through a polymerization process" may mean comprising a polymer and other materials that will become a final product.

In an exemplary embodiment of the present application, extruding the liquid-state polymer separated from the devolatilizer may be further comprised. Through the extruding of the liquid-state polymer, a product to be produced through the continuous solution polymerization process may be produced.

In an exemplary embodiment of the present application, the supplying of the product to the liquid-liquid separator (L/L separator) may comprise heating the product using a first heat exchanger; depressurizing the heated product using a first pressure reducing valve; and supplying the heated and depressurized product to a liquid-liquid separator.

In an exemplary embodiment of the present application, the heating of the product using the first heat exchanger may be performed at a temperature equal to or lower than the bubble point temperature of the product.

In an exemplary embodiment of the present application, the depressurizing of the heated product using the first pressure reducing valve may reduce pressure such that the pressure of the product becomes equal to or lower than the cloud-point pressure. The pressure may be a measured pressure.

When the above temperature and pressure ranges are satisfied, the product may be more efficiently separated into a first solution comprising the polymer (a solution comprising a large amount of polymer) and a second solution comprising the polymer (a solution comprising a small amount of polymer) in the liquid-liquid separator.

In an exemplary embodiment of the present application, when only a solid-liquid separator to be described below is applied without applying the liquid-liquid separator, the effects of the continuous solution polymerization process as in the present application cannot be obtained because there is no lean-phase.

In an exemplary embodiment of the present application, the supplying of the first solution separated from the liquid-liquid separator to the devolatilizer may comprise heating the first solution using a second heat exchanger; depressurizing the heated first solution using a second pressure reducing valve; and supplying the heated and depressurized first solution to a devolatilizer.

In an exemplary embodiment of the present application, the heating of the first solution using the second heat exchanger may be performed at a temperature lower than the bubble point temperature of the first solution.

In an exemplary embodiment of the present application, the depressurizing of the first solution using the second pressure reducing valve may reduce pressure such that the pressure of the first solution becomes equal to or lower than the bubble point pressure. The pressure may be a measured pressure.

When the above temperature and pressure ranges are satisfied, the first solution may be more efficiently separated into the vapor comprising the polymer and the liquid-state polymer in the devolatilizer.

In an exemplary embodiment of the present application, the supplying of the second solution separated from the liquid-liquid separator to the solid-liquid separator (S/L separator) may comprise cooling the second solution using a third heat exchanger; and supplying the cooled second solution to a solid-liquid separator.

In an exemplary embodiment of the present application, the cooling of the second solution using the third heat exchanger may be performed at a temperature equal to or higher than the melting point of the second solution.

In an exemplary embodiment of the present application, the supplying of the vapor comprising the polymer separated from the devolatilizer to the solid-liquid separator (S/L separator) may comprise: cooling the vapor comprising the polymer using a fourth heat exchanger; and supplying the cooled vapor comprising the polymer to a solid-liquid separator.

In an exemplary embodiment of the present application, the cooling of the vapor comprising the polymer using the fourth heat exchanger may cool the vapor comprising the polymer at a temperature equal to or higher than the temperature of the melting point of the polymer and lower than the bubble point temperature of the vapor comprising the polymer.

When the above temperature range is satisfied, the second solution and the vapor comprising the polymer in the solid-liquid separator may be more efficiently separated into a solvent capable of being introduced into the reactor and a solid comprising the polymer.

In an exemplary embodiment of the present application, extruding the solid-state polymer separated from the solid-liquid separator may be further comprised. The description on the above-described extrusion step may be applied to the extruding of the solid-state polymer separated from the solid-liquid separator.

In an exemplary embodiment of the present application, when only the above-described liquid-liquid separator is applied without applying the solid-liquid separator, the fouling phenomenon may occur as the temperature of the lean-phase condenser of the liquid-liquid separator is lowered, so that operation may be impossible, and the effects of the continuous solution polymerization process as in the present application cannot be obtained.

In an exemplary embodiment of the present application, the introducing and recirculating of the solvent separated from the solid-liquid separator and capable of being introduced into the reactor into the reactor may comprise: adjusting the solvent to a reaction temperature range of the continuous solution polymerization process using a fifth heat exchanger; and introducing the solvent into the reactor.

The polymerization process according to an exemplary embodiment of the present application may further comprise re-introducing a portion of the solvent separated from the solid-liquid separator and capable of being introduced into the reactor into the solid-liquid separator. The temperature of the solid-liquid separator may be adjusted by a process (recirculation) of re-introducing a portion of the solvent separated from the solid-liquid separator and capable of being introduced into the reactor into the solid-liquid separator. As described above, the solid-liquid separator needs to be operated at a temperature equal to or lower than the melting point of the polymer. In this case, it is possible to efficiently adjust the temperature within the operating temperature range of the solid-liquid separator using a portion of the solvent separated from the solid-liquid separator and capable of being introduced into the reactor.

In an exemplary embodiment of the present application, the content of the solvent re-introduced into the solid-liquid separator may be adjusted such that the solid-liquid separator can be operated even at a temperature equal to or lower than the melting point of the polymer. That is, the solid-liquid separation efficiency of the solid-liquid separator may be increased by adjusting the content of the solvent re-introduced into the solid-liquid separator.

In an exemplary embodiment of the present application, the polymer of the product comprising the polymer may be a polyolefin. Even when the polymer is a polyolefin, the continuous solution polymerization process (polymerization method) according to the present invention may be used.

In an exemplary embodiment of the present application, when the polymer of the product comprising the polymer is a polyolefin, the above-described heating, cooling and pressurizing conditions may be expressed more specifically as described below.

In an exemplary embodiment of the present application, when the polymer of the product comprising the polymer is a polyolefin, the heating of the product using the first heat exchanger may heat the product at 120°C to 220°C, preferably 130°C to 210°C.

In an exemplary embodiment of the present application, when the polymer of the product comprising the polymer is a polyolefin, the depressurizing of the heated product using the first pressure reducing valve may reduce pressure such that the pressure of the product becomes 20 bar to 90 bar, preferably 30 bar to 80 bar. The pressure may be a measured pressure.

In an exemplary embodiment of the present application, when the polymer of the product comprising the polymer is a polyolefin, the heating of the first solution comprising the polymer using the second heat exchanger may heat the first solution comprising the polymer such that the temperature of the first solution becomes 220°C to 300°C, preferably 220°C to 280°C.

In an exemplary embodiment of the present application, when the polymer of the product comprising the polymer is a polyolefin, the depressurizing of the first solution comprising the heated polymer using the second pressure reducing valve may reduce pressure such that the pressure of the first solution comprising the polymer becomes 1 bar to 40 bar. The pressure may be a measured pressure.

In an exemplary embodiment of the present application, when the polymer of the product comprising the polymer is a polyolefin, the cooling of the second solution comprising the polymer using the third heat exchanger may cool the second solution such that the temperature of the second solution comprising the polymer becomes 40°C to 160°C, preferably 50°C to 100°C.

When the above conditions are satisfied while using a polyolefin in the continuous polymerization process (polymerization method) according to the present invention, the efficiency of the process may be further improved.

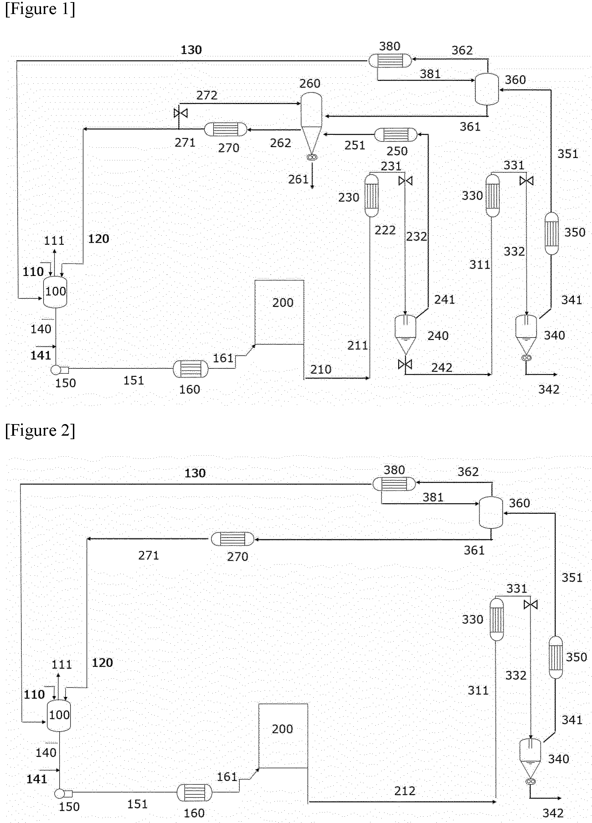

FIG. 1 is a block diagram illustrating the continuous solution polymerization process according to the present application, and examples of the present invention will be described based on the block diagram. A product comprising a polymer is produced in a reactor 200 through a polymerization process. The product comprising the polymer produced in the reactor 200 is heated using a first heat exchanger 230 through a route 210-211, and is supplied to a liquid-liquid separator 240 through a route 231-232. In this case, a process of depressurizing the heated product may be performed using a first pressure reducing valve provided between the route 231-232.

Subsequently, the product supplied from the liquid-liquid separator 240 is divided into a solution comprising a large amount of polymer (a polymer-rich solution, a first solution) and a solution comprising a small amount of polymer (a polymer-lean solution, a second solution).

The solution comprising a large amount of polymer separated from the liquid-liquid separator 240 is supplied to a second heat exchanger 330 through a route 242-311, and a solution comprising a large amount of polymer is heated in the second heat exchanger 330. The heated solution comprising a large amount of polymer is depressurized using the second pressure reducing valve, and the heated and depressurized solution comprising a large amount of polymer is supplied to a devolatilizer 340 through a route 332.

The solution comprising a large amount of polymer is separated into a vapor comprising a small amount of polymer (polymer lean vapor) and a melted polymer (polymer melt) in the devolatilizer 340. The melted polymer may be supplied through the route 342 to an additional devolatilizer or extruder and a pelletizer to be processed as a final product.

The vapor comprising a small amount of polymer is supplied to a fourth heat exchanger 350 through the route 341, and the vapor comprising a small amount of polymer is cooled in the fourth heat exchanger 350, and is supplied to a tank 360 through the 351 route. In this case, a portion of the cooled vapor comprising a small amount of polymer supplied to the tank 360 may be supplied to a feed supply vessel 100 through a route 362-130, if necessary. During this process, an additional cooling process may be performed in a sixth heat exchanger 380.

Further, the cooled vapor comprising a small amount of polymer moving from the tank 360 through the route 362 is additionally cooled using the sixth heat exchanger 380, and is again supplied to the tank 360 through the route 381, and thus may be supplied to a solid-liquid separator 260.

The cooled vapor comprising a small amount of polymer supplied to the tank 360 is substantially in the form of a liquid, which may be supplied to the solid-liquid separator 260 through the route 361.

Not only the cooled vapor comprising a small amount of polymer supplied through the route 361, but also the solution comprising a small amount of polymer separated from the liquid-liquid separator 240 is supplied to the solid-liquid separator 260. **In** this case, the solution comprising a small amount of polymer separated from the liquid-liquid separator 240 is subjected to a cooling process using a third heat exchanger 250, and then supplied to the solid-liquid separator 260. The route through which the solution comprising a small amount of polymer is supplied to the solid-liquid separator 260 corresponds to a route 241-251.

**In** the solid-liquid separator 260, a process of separating the solution comprising a small amount of polymer into a solvent (recycled solvent) capable of being introduced into the reactor 200 and a solid comprising the polymer is performed. **In** this case, the solid comprising the polymer is supplied to an extruder, a pelletizer, or a devolatilizer, and thus may be produced as a final product.

Most of the solvent capable of being introduced into the reactor 200 is supplied to the feed supply vessel 100, but a portion of the solvent is re-introduced into the solid-liquid separator 260, and thus may be used in the process of adjusting the operating temperature of the solid-liquid separator 260. In this case, the route through which the solvent is re-introduced is a route 262-271-272, and in this process, the temperature of the solvent may be adjusted by a seventh heat exchanger 270, and it may be regulated by a valve provided between the route 271-272 whether the solvent is re-introduced.

As described above, most of the solvent capable of being introduced into the reactor 200 is supplied to the feed supply vessel 100 through the route 262-271-120 (recirculation process), and even in this process, the temperature of the solvent may be adjusted by the seventh heat exchanger 270.

The feed supply vessel 100 may be supplied with a comonomer used for the polymerization reaction in the reactor 200 through the route 140, and as described above, the feed supply vessel 100 may be supplied with the solvent (recycled solvent) capable of being introduced into the reactor 200 and a portion of the cooled vapor (unreacted monomer) comprising a small amount of polymer through the routes of 120 and 130, respectively. In addition, a solvent may be additionally supplied through the route 110, if necessary. Furthermore, a route 111 corresponds to a vent/purge line.

After all, a feed comprising the solvent (recycled solvent) capable of being introduced into the reactor 200, and the like in the feed supply vessel 100 is supplied to the reactor 200 through the route 151-161 by the feed pump 150 to repeat the above-described process. More specifically, the feed may be a mixture comprising a comonomer, a solvent, and the like.

In this case, the comonomer used for the polymerization reaction may be additionally supplied through a separate route 141, and the feed may be cooled by an eighth heat exchanger 160. In this case, the additionally supplied comonomer is shown as being supplied before the feed pump 150 in FIG. 1, but is not limited thereto, and may also be additionally supplied before and after the eighth heat exchanger 160. Further, the eighth heat exchanger 160 may also be called a feed cooler.

In addition, a catalyst for the polymerization reaction may be introduced, and the illustration of a portion related to the introduction of the catalyst is omitted in FIG. 1.

FIG. 2 is a block diagram illustrating an existing continuous solution polymerization process, and comparative examples of the present invention will be described based on the block diagram. In the case of FIG. 2, the contents described in FIG. 1 may be applied except for the processes using the liquid-liquid separator 240 and the solid-liquid separator 260 in FIG. 1. That is, routes 210-211-231-232-241-251 and 210-211-231-232-242 are not used, and through the route 210-212-311, a product comprising a polymer produced by the polymerization reaction in the reactor 200 is transferred to a devolatilizer 340. Except for this, the description on FIG. 1 may be applied.

[Mode for Invention]

Hereinafter, the present application will be described in detail with reference to Examples for specifically describing the present application. However, the Examples according to the present application may be modified in various forms, and it is not interpreted that the scope of the present application is limited to the Examples described in detail below. The Examples of the present application are provided for more completely explaining the present application to the person with ordinary skill in the art.

**<Example 1>**

The conditions for the devolatilizer and the solid-liquid separator were assumed as follows (Assumed Conditions 1) to 5)), and the conditions shown in the following Table 1 were applied to the continuous solution polymerization process according to the present invention as shown in FIG. 1 above (polymerization method) to simulate a process of producing a final polymer product using the Aspen Plus program (manufacturer: Aspen Technology Inc.).

**<Assumed Conditions>**

1) Devolatilizer Entrainment: 0.1 wt%
2) Devolatilizer separation efficiency: Polymer 70 wt%
3) Solid-liquid separator hexane moisture content: 1 wt%
4) Heat exchanger at front end of solid-liquid separator: Performs only cooling at the reactor level and operates under the conditions of temperature equal to or higher than melting point and pressure

5) Polymer type: Polyolefin

In the assumption, the entrainment means a phenomenon in which liquid becomes small drops and scatters into gas or vapor and is carried by an air current, and is one of the elements that interfere with the process. The "devolatilizer entrainment: 0.1 wt%" means that a material corresponding to 0.1 wt% based on the total amount of materials introduced into the devolatilizer (solution comprising a large amount of polymer) may undergo the entrainment phenomenon.

Furthermore, the "devolatilizer separation efficiency: Polymer 70 wt%" means that 70 wt% based on the total amount of polymers comprised in the solution is separated from the solution comprising a large amount of polymer (first solution) introduced into the devolatilizer.

The "solid-liquid separator hexane moisture content" means the content of hexane comprised in the solid components separated through a solid-liquid separator, and the content of hexane is described as the solid-liquid separator hexane moisture content because the polymer is currently assumed to be a polyolefin.

Finally, Case 4) of the assumptions corresponds to the conditions for preventing fouling that occurs during operation.

**<Comparative Example 1>**

A process of producing a final polymer product was simulated using the Aspen Plus program (manufacturer: Aspen Technology Inc.) by applying the same assumption as in Example 1, except that in Example 1, the conditions described in the following Table 1 were applied to the existing continuous solution polymerization process (polymerization method) as in FIG. 2.

**<Comparative Example 2>**

Dynamic simulation was performed under the same conditions as in Example 1 without applying a solid-liquid separator. However, as the temperature of the lean-phase condenser in the liquid-liquid separator was lowered after the start of operation, the fouling phenomenon occurred and the plugging phenomenon occurred, thereby making the operation impossible.

[Table 1]

| Condition | Route (Stream) | Comparative Example 1 | Example 1 |
|---|---|---|---|
| | | 1 | 1 |
| Reactor Polymer wt% | 210 | 17 | 17 |
| Reactor temperature (°C) | 210 | 120 | 120 |
| Pre-heating temperature (°C) | 231 | - | 200.0 |
| Pre-heating heat amount (Gcal/hr) | 230 | - | 2.2 |
| LLS Pressure (bar) | 232 | - | 41.8 |
| Lean Cooler front end temperature (°C) | 241 | - | 200.0 |
| Lean Cooler rear end temperature (°C) | 251 | - | 120.0 |
| Lean Cooler heat amount (Gcal/hr) | 250 | - | -0.8 |
| Flash-heater front end temperature (°C) | 311 | 120.0 | 200.0 |
| Flash-heater rear end temperature (°C) | 331 | 249.3 | 250.5 |
| Flash-heating heat amount (Gcal/hr) | 330 | 3.9 | 1.1 |
| Devolatilizer pressure (kg/sqcmg) | 332 | 15.0 | 15.0 |
| Vapor HX1 front end temperature (°C) | 341 | 201.3 | 205.8 |
| Vapor HX1 rear end temperature (°C) | 351 | 120.0 | 120.0 |
| Vapor HX1 heat amount (Gcal/hr) | 350 | -3.4 | -2.1 |
| Recycle HX front end temperature (°C) | 262 | 90.0 | 90.0 |
| Recycle HX rear end temperature (°C) | 271 | 15.0 | 15.0 |
| Recycle HX heat amount (Gcal/hr) | 270 | -2.0 | -2.0 |

(continued)

| Condition | Route (Stream) | Comparative Example 1 | Example 1 |
|---|---|---|---|
| | | 1 | 1 |
| Heating Duty (Gcal/hr) | - | 3.9 | 3.3 |
| Cooling Duty (Gcal/hr) | - | 5.4 | 4.8 |
| Total Heat Duty (Gcal/hr) | - | 9.3 | 8.1 |

The names for the conditions in Table 1 above may be matched using the numbers shown on the routes and FIGS. 1 and 2, and although not shown in Table 1 above, the pressure of the liquid-liquid separator 240 was assumed to be 40 bar.

The number average molecular weight (Mn) of the final product and the polydispersity index (PDI) of the polymer according to the simulation results of Examples 1 and 2 above were as shown in the following Table 2.

[Table 2]

| | Number average molecular weight (Mn, g/mol) | Polydispersity index (PDI) |
|---|---|---|
| Example 1 | 94,645 | 1.84 |
| Comparative Example 1 | 90,237 | 2.02 |

According to the results in Table 2 above, it could be confirmed that in Example 1, the number average molecular weight and the polydispersity index of the polymer (polyolefin) corresponding to the final product were larger and smaller, respectively, than those in Comparative Example 1. A high PDI means that the polymer has a wide molecular weight distribution and is composed of molecules of various sizes, thereby confirming that the number average molecular weight of Comparative Example 1 is smaller than that of Example 1.

In the process of producing a main product corresponding to a high molecular weight polymer by extracting a low molecular weight polymer through a solid-liquid separator, when a process of using a liquid-liquid separator is comprised as in the continuous polymerization process according to the present application, it means that the efficiency may be further improved. For reference, a high molecular weight polymer may be expressed as having a low molecular weight distribution (MWD) or a low melt flow rate ratio (MFRR). Further, according to the simulation results, it could be confirmed that the extraction of the low molecular weight polymer through a solid-liquid separator may improve the operation stability and the yield by preventing the fouling of the heat exchanger used in the process of supplying the recycled solvent and the entire recovery process in Comparative Example 1.

Additionally, according to the simulation results, it could be confirmed that the heating duty was decreased by 15% and the cooling duty was decreased by 11% in Example 1 compared to Comparative Example 1. That is, it could be confirmed that the energy efficiency was high. By introducing a liquid-liquid separator, it is possible to reduce the temperature of the polymer solution state required by the devolatilizer by first separating the solvent of the polymer solution, which corresponds to an effect caused by saving the amount of heat as much as the amount of latent heat generated in the process of condensing vapor.

That is, when a polymer is produced by applying the continuous solution polymerization process according to the present application, energy efficiency and process stability may be improved while increasing the yield of a desired product. Furthermore, as can be additionally confirmed in Table 2 above, there is also an advantage in that the physical properties (Mn, MWD) can be adjusted according to desired standards.

**Claims**

1. A continuous solution polymerization process comprising:

    producing a product comprising a polymer through a polymerization process in a reactor;
    supplying the product to a liquid-liquid separator (L/L separator);
    separating the supplied product into a first solution comprising the polymer and a second solution comprising the polymer in the liquid-liquid separator;
    supplying the first solution separated from the liquid-liquid separator to a devolatilizer;
    supplying the second solution separated from the liquid-liquid separator to a solid-liquid separator (S/L separator);

separating the first solution into a vapor comprising the polymer and a liquid-state polymer in the devolatilizer;

supplying the vapor comprising the polymer separated from the devolatilizer to the solid-liquid separator (S/L separator);

separating the supplied second solution and the vapor comprising the polymer into a solvent capable of being introduced into the reactor and a solid comprising the polymer in the solid-liquid separator; and

introducing and recirculating the solvent capable of being introduced into the reactor separated from the solid-liquid separator into the reactor,

wherein the first solution and the second solution satisfy the following Equation 1:

[Equation 1]

$$M_a > M_b$$

in Equation 1,

$M_a$ means the content of the polymer in the first solution, and

$M_b$ means the content of the polymer in the second solution.

2. The continuous solution polymerization process of claim 1, further comprising extruding the liquid-state polymer separated from the devolatilizer.

3. The continuous solution polymerization process of claim 1, wherein the supplying of the product to the liquid-liquid separator (L/L separator) comprises:

heating the product using a first heat exchanger;

depressurizing the heated product using a first pressure reducing valve; and

supplying the heated and depressurized product to the liquid-liquid separator.

4. The continuous solution polymerization process of claim 3, wherein the depressurizing of the heated product using the first pressure reducing valve reduces pressure such that the pressure of the product becomes equal to or lower than a cloud-point pressure.

5. The continuous solution polymerization process of claim 1, wherein the supplying of the first solution separated from the liquid-liquid separator to the devolatilizer comprises:

heating the first solution using a second heat exchanger;

depressurizing the heated first solution using a second pressure reducing valve; and

supplying the heated and depressurized first solution to the devolatilizer.

6. The continuous solution polymerization process of claim 5, wherein the heating of the first solution using the second heat exchanger is performed at a temperature lower than the bubble point temperature of the first solution.

7. The continuous solution polymerization process of claim 5, wherein the depressurizing of the heated first solution using the second pressure reducing valve reduces pressure such that the pressure of the first solution becomes equal to or lower than a bubble point pressure.

8. The continuous solution polymerization process of claim 1, wherein the supplying of the second solution separated from the liquid-liquid separator to the solid-liquid separator (S/L separator) comprises:

cooling the second solution using a third heat exchanger; and

supplying the cooled second solution to the solid-liquid separator.

9. The continuous solution polymerization process of claim 8, wherein the cooling of the second solution using the third heat exchanger is performed at a temperature equal to or higher than a melting point of the second solution.

10. The continuous solution polymerization process of claim 1, wherein the supplying of the vapor comprising the polymer separated from the devolatilizer to the solid-liquid separator (S/L separator) comprises:

cooling the vapor comprising the polymer using a fourth heat exchanger; and
supplying the cooled vapor comprising the polymer to the solid-liquid separator.

11. The continuous solution polymerization process of claim 10, wherein the cooling of the vapor comprising the polymer using the fourth heat exchanger cools the vapor comprising the polymer at a temperature equal to or higher than the temperature of the melting point of the polymer and lower than a bubble point temperature of the vapor comprising the polymer.

12. The continuous solution polymerization process of claim 1, wherein the introducing and recirculating of the solvent capable of being introduced into the reactor separated from the solid-liquid separator into the reactor comprises a recirculation system comprising:

adjusting the solvent to a reaction temperature range of the continuous solution polymerization process using a fifth heat exchanger; and
introducing the solvent into the reactor.

13. The continuous solution polymerization process of claim 1, further comprising re-introducing a portion of the solvent separated from the solid-liquid separator and capable of being introduced into the reactor into the solid-liquid separator.

14. The continuous solution polymerization process of claim 1, wherein the polymer is a polyolefin.

[Figure 1]

[Figure 2]

## INTERNATIONAL SEARCH REPORT

| International application No. |
|---|
| **PCT/KR2024/095377** |

| A. | CLASSIFICATION OF SUBJECT MATTER |
|---|---|

**C08F 6/06**(2006.01)i; **C08F 2/04**(2006.01)i; **C08F 2/01**(2006.01)i; **C08F 10/00**(2006.01)i

According to International Patent Classification (IPC) or to both national classification and IPC

| B. | FIELDS SEARCHED |
|---|---|

Minimum documentation searched (classification system followed by classification symbols)

C08F 6/06(2006.01); B01D 1/00(2006.01); B01D 5/00(2006.01); B01D 53/04(2006.01); C07C 2/36(2006.01); C08F 2/02(2006.01); C08F 2/06(2006.01); C08F 210/16(2006.01); C08F 6/00(2006.01); C08L 23/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 중합(polymerization), 분리기(separator), 탈휘발기(devolatilizer), 파울링 (fouling), 폴리올레핀(polyolefin)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2017-0135907 A (EXXONMOBIL CHEMICAL PATENTS INC.) 08 December 2017 (2017-12-08) <br> See claim 1; paragraphs [0022]-[0036]; and figure 1. | 1-14 |
| A | KR 10-2015-0006067 A (SASOL TECHNOLOGY (PTY) LIMITED) 15 January 2015 (2015-01-15) <br> See entire document. | 1-14 |
| A | US 2012-0225998 A1 (KISS, G. et al.) 06 September 2012 (2012-09-06) <br> See entire document. | 1-14 |
| A | KR 10-2022-0043567 A (HANWHA TOTAL PETROCHEMICAL CO., LTD.) 05 April 2022 (2022-04-05) <br> See entire document. | 1-14 |
| A | KR 10-2022-0026805 A (LG CHEM, LTD.) 07 March 2022 (2022-03-07) <br> See entire document. | 1-14 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 June 2024** | **10 June 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/095377**

| Patent document cited in search report | | | Publication date (day/month/year) | Patent family member(s) | | | Publication date (day/month/year) |
|---|---|---|---|---|---|---|---|
| KR | 10-2017-0135907 | A | 08 December 2017 | CN | 107614541 | A | 19 January 2018 |
| | | | | CN | 107614541 | B | 09 August 2019 |
| | | | | EP | 3307794 | A1 | 18 April 2018 |
| | | | | EP | 3307794 | B1 | 27 February 2019 |
| | | | | JP | 2018-522099 | A | 09 August 2018 |
| | | | | KR | 10-1975695 | B1 | 07 May 2019 |
| | | | | US | 2016-0362506 | A1 | 15 December 2016 |
| | | | | US | 9815913 | B2 | 14 November 2017 |
| | | | | WO | 2016-204874 | A1 | 22 December 2016 |
| | | | | WO | 2016-204874 | A8 | 08 September 2017 |
| KR | 10-2015-0006067 | A | 15 January 2015 | BR | 112014027665 | A2 | 27 June 2017 |
| | | | | BR | 112014027665 | B1 | 13 April 2021 |
| | | | | CA | 2871215 | A1 | 14 November 2013 |
| | | | | CA | 2871215 | C | 19 June 2018 |
| | | | | CN | 104284703 | A | 14 January 2015 |
| | | | | CN | 104284703 | B | 06 April 2016 |
| | | | | EP | 2846888 | A1 | 18 March 2015 |
| | | | | EP | 2846888 | B1 | 14 September 2016 |
| | | | | ES | 2607135 | T3 | 29 March 2017 |
| | | | | IN | 9315DEN2014 | A | 10 July 2015 |
| | | | | KR | 10-2057361 | B1 | 18 December 2019 |
| | | | | MX | 2014013624 | A | 12 February 2015 |
| | | | | MX | 365252 | B | 28 May 2019 |
| | | | | MY | 166852 | A | 24 July 2018 |
| | | | | SG | 11201406965 | A | 27 November 2014 |
| | | | | US | 2015-0133707 | A1 | 14 May 2015 |
| | | | | US | 9399179 | B2 | 26 July 2016 |
| | | | | WO | 2013-168098 | A1 | 14 November 2013 |
| US | 2012-0225998 | A1 | 06 September 2012 | CN | 101945940 | A | 12 January 2011 |
| | | | | CN | 101945940 | B | 09 April 2014 |
| | | | | CN | 103254497 | A | 21 August 2013 |
| | | | | CN | 103254497 | B | 18 November 2015 |
| | | | | CN | 103254513 | A | 21 August 2013 |
| | | | | CN | 103254513 | B | 26 August 2015 |
| | | | | CN | 103254514 | A | 21 August 2013 |
| | | | | CN | 103254514 | B | 18 November 2015 |
| | | | | EP | 2231772 | A1 | 29 September 2010 |
| | | | | EP | 2231772 | B1 | 16 April 2014 |
| | | | | EP | 2450403 | A1 | 09 May 2012 |
| | | | | US | 2009-0163643 | A1 | 25 June 2009 |
| | | | | US | 8138269 | B2 | 20 March 2012 |
| | | | | US | 8614277 | B2 | 24 December 2013 |
| | | | | WO | 2009-082468 | A1 | 02 July 2009 |
| KR | 10-2022-0043567 | A | 05 April 2022 | CN | 116348193 | A | 27 June 2023 |
| | | | | EP | 4223788 | A1 | 09 August 2023 |
| | | | | JP | 2023-544556 | A | 24 October 2023 |
| | | | | KR | 10-2420660 | B1 | 13 July 2022 |
| | | | | US | 2023-0365724 | A1 | 16 November 2023 |
| | | | | WO | 2022-071650 | A1 | 07 April 2022 |
| KR | 10-2022-0026805 | A | 07 March 2022 | | None | | |

Form PCT/ISA/210 (patent family annex) (July 2022)

14

**INTERNATIONAL SEARCH REPORT**
Information on patent family members

International application No.

**PCT/KR2024/095377**

| Patent document cited in search report | Publication date (day/month/year) | Patent family member(s) | Publication date (day/month/year) |
|---|---|---|---|
| | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230022474